# EUROPÄISCHE PATENTSCHRIFT

(11) **EP 1 532 495 B1**
(45) Veröffentlichungstag und Bekanntmachung des Hinweises auf die Patenterteilung: **13.08.2008**
(21) Anmeldenummer: 03720126.6
(22) Anmeldetag: 24.02.2003
(51) Int. Cl.: G05B 19/042

(54) **STEUERGERAT**
CONTROL DEVICE
APPAREIL DE COMMANDE

(30) Priorität: 22.08.2002 DE 10238529
(43) Veröffentlichungstag der Anmeldung: 25.05.2005
(73) Patentinhaber: ROBERT BOSCH GMBH, 70442 Stuttgart (DE)
(72) Erfinder: STEIGER, Eckard, 70195 Stuttgart (DE); OHL, Christian, 72793 Pfullingen (DE); SCHUMACHER, Hartmut, 71691 Freiberg (DE)
(86) Internationale Anmeldenummer: PCT/DE2003/000563
(87) Internationale Veröffentlichungsnummer: WO 2004/021093

(56) Entgegenhaltungen:
- WO-A-99/12779
- DE-A- 10 032 216
- DE-A- 10 036 643
- DE-A- 10 049 905
- MASON A ET AL: "A GENRIC MULTIELEMENT MICROSYSTEM FOR PORTABLE WIRELESS APPLICATIONS" PROCEEDINGS OF THE IEEE, IEEE. NEW YORK, US, Bd. 86, Nr. 8, August 1998 (1998-08), Seiten 1733-1746, XP000848437 ISSN: 0018-9219
- YAZDI N ET AL: "A generic interface chip for capacitive sensors in low-power multi-parameter microsystems" SENSORS AND ACTUATORS A, ELSEVIER SEQUOIA S.A., LAUSANNE, CH, Bd. 84, Nr. 3, 1. September 2000 (2000-09-01), Seiten 351-361, XP004229021 ISSN: 0924-4247
- ZHOU J, MASON A: "COMMUNICATION BUSES AND PROTOCOLS FOR SENSOR NETWORKS" SENSORS, [Online] Bd. 2, Nr. 7, 4. Juli 2002 (2002-07-04), Seiten 244-257, XP002299997 ISSN: 1424-8220 Gefunden im Internet: URL:http://www.mdpi.net/sensors/papers/s20 700244.pdf> [gefunden am 2004-10-08]
- BOTERENBROOD H: "B-SENSOR WITH ADDRESSABLE SERIAL PERIPHERAL INTERFACE USER MANUAL v1.5" INTERNET ARTICLE, [Online] 5. April 2001 (2001-04-05), XP002299998 Gefunden im Internet: URL:http://www.nikhef.nl/pub/departments/ ct/po/html/Bsensor/Bsensor.pdf> [gefunden am 2004-10-08]

## Beschreibung

### Stand der Technik

Die Erfindung geht aus von einem Steuergerät mit einem Prozessor und wenigstens einem Inertialsensor in einem Gehäuse nach der Gattung des unabhängigen Patentanspruchs.

Aus Mason a et al: "A generic multielement microsystem for portable wireless applications", proceedings of the IEEE, New York, Band 86, Nr. 8, August 1998, Seiten 1733-1746 ist ein Mikrosystem bekannt, bei dem verschiedene Sensoren, dabei auch ein Beschleunigungssensor Daten an einen Mikroprozessor übertragen können. Eine Übertragung von digitalen Daten ist dabei als Möglichkeit angegeben. Das Mikrosystem soll für meteorologische Anwendungen verwendet werden. Aus DE 100 49 905 A ist es bekannt, Daten von einer kinematischen Sensorplattform digital zu übertragen.

### Vorteile der Erfindung

Das erfindungsgemäße Steuergerät mit den Merkmalen des unabhängigen Patentanspruchs hat den Vorteil, dass die digitale Übertragung zwischen dem Prozessor und dem Inertialsensor im Steuergerät störsicher gegenüber elektromagnetischen Störungen, Nebenschlüssen und Feuchte ist. Insbesondere bei hoher Signalauflösung ist dieser Vorteil wesentlich. Auch bei immer kleiner werdenden steuergeräteinternen Spannungspegeln, die durch die immer kleiner werdenden Prozessorpegel bedingt sind, kommt dieser Vorteil wesentlich zum Tragen. Darüber hinaus ermöglicht die digitale Übertragung eine leichte Identifizierung einer fehlerhaften Übertragung. Damit ist eine direkte und messgrößenunabhängige Bewertung der übertragenen Sensorinformation möglich. Unter einem Inertialsensor wird ein Beschleunigungssensor und/oder ein Drehratensensor verstanden.

Weiterhin ist es von Vorteil, dass die Übertragung von wenigstens einem Fehlerbit und wenigstens einem Statusbit vorgesehen ist. Das Fehlerbit ermöglicht die Entdeckung und Identifizierung von Übertragungsfehlern oder von Sensorfehlern, um gegebenenfalls angemessene Maßnahmen vorzunehmen. Solche Maßnahmen können eine Fehlerkorrektur aus den empfangenen Daten sein oder die Umschaltung des Funktionszustahdes des Systems bzw. Steuergeräts, beispielsweise Fehlerbetrieb, Ausgabe Fehlermeldung, Einschaltung Warnlampe, oder die erneute Anforderung der übertragenen Daten, vorzugsweise in einem Datentelegramm, also einem Rahmen. Das Statusbit ermöglicht beispielsweise, dass der Prozessor erkennt, in welchem Betriebszustand der Sensor sich befindet, beispielsweise laufender Sensortest, Offsetregelungsmodus oder Initialisierungsphase. Es können mehr als ein Fehlerbit und/oder Statusbit verwendet werden.

Durch die in den abhängigen Ansprüchen angeführten Maßnahmen und Weiterbildungen sind vorteilhafte Verbesserungen des im unabhängigen Patentanspruch angegebenen Steuergeräts möglich.

Besonders vorteilhaft ist, dass die Datenübertragung durch eine serielle synchrone Schnittstelle erreicht wird. An diese serielle Schnittstelle können mehrere Sensoren im Steuergerät angeschlossen werden. Die Verwendung einer synchron ausgebildeten Schnittstelle ermöglicht eine einfachere Verarbeitung der Signale.

Weiterhin ist es von Vorteil, das die Datenübertragung bidirektional ausgebildet ist. Dies ermöglicht, dass einerseits der Sensor Messdaten zum Prozessor überträgt und andererseits der Prozessor den Sensor in einen bestimmten Zustand versetzt oder bestimmte Daten von ihm abruft. Dies brauchen nicht nur Messdaten sein, sondern auch interne Informationen über den Sensor, wie beispielsweise ein Selbsttestergebnis oder den jeweiligen Betriebszustand, in dem der Sensor sich befindet (Offsetregelungsmodus, laufender Selbsttest, Initialisierungsphase etc.).

Es werden hier vier Leitungen für die Datenübertragung vorgeschlagen, wobei drei Leitungen davon an jeden Sensor angeschlossen sind, der sich im Steuergerät befindet und an dieser Datenübertragung teilnimmt und die vierte Leitung jeweils für jeden Sensor vorgesehen ist. Diese vierte Leitung sorgt für die Aktivierung der Datenübertragung mit dem jeweiligen Sensor. Sind also drei Sensoren an die erfindungsgemäße Datenübertragung angeschlossen, sind drei solche Leitungen, die jeweils vom Prozessor zu diesen drei Sensoren gehen, vorgesehen, um die einzelnen Sensoren zu den entsprechenden Zeitpunkten zu aktivieren. Daneben gibt es die weiteren drei Leitungen, die für die eigentliche Datenübertragung vorgesehen sind. Dies wird im allgemeinen als Serial Peripherial Interface (SPI) bezeichnet, die eine Taktleitung, eine Eingabeleitung, eine Ausgabeleitung und eben die Sensorauswahlleitung aufweist.

Weiterhin ist es vorteilhaft, dass der wenigstens eine Inertialsensor mehrkanalig ausgebildet sein kann. Mehrkanaligkeit bedeutet, dass mehr als ein Messmodus hier mit einem Sensor durchführbar ist.

Darüber hinaus ist es von Vorteil, dass die Datenübertragung zur Auslösung der Umschaltung von einem Betriebszustand in einen anderen des wenigstens einen Inertialsensors konfiguriert ist.

Letztlich ist es auch von Vorteil, dass das erfindungsgemäße Steuergerät in einem Rückhaltemittel und/oder einer Fahrdynamikregelung und/oder einem Navigationssystem und/oder einer systemübergreifenden Sensorbox einsetzbar ist.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild des erfindungsgemäßen Steuergeräts,
- Figur 2a: eine Informationsübertragung vom Prozessor zum Inertialsensor,
- Figur 2b: eine Informationsübertragung vom Sensor zum Prozessor und
- Figur 3: eine Sensordatenübertragung vom Sensor zum Prozessor.

### Beschreibung

Inertialsensoren, die heute in einem Steuergerät für Rückhaltesysteme eingesetzt werden, übertragen analog zu einem Analogeingang eines Mikrokontrollers im Steuergerät ihr Mess-Signal. Der Mikrokontroller weist dann einen Analog-Digital-Wandler auf. Damit werden also Beschleunigungs- oder Drehratensensorsignale, da Beschleunigungssensoren und Drehratensensoren als Inertialsensoren zu verstehen sind, repräsentiert durch Analogspannungszeitverläufe. Der Momentanwert der Abweichung von einem Ruhewert, typischerweise die halbe Versorgungsspannung des Inertialsensors, repräsentiert den aktuellen Messwert. Die Zuordnung erfolgt über sensorspezifische Empfindlichkeiten, die typischerweise in Millivolt pro Beschleunigung oder Millivolt pro Winkeländerung pro Zeit angegeben wird. Die weitere Signalverarbeitung, die mit der Analog-DigitalWandlung begonnen hat, erfolgt dann im Mikrokontroller.

Ein wesentlicher Nachteil dieser Technik liegt in der Störanfälligkeit des übertragenen Analogsignals. Elektromagnetische Störungen, Nebenschlüsse durch Feuchte und andere Störungen können das Sensorausgangssignal in einem für das Rückhaltesystem kritischen Maße verändern. Es kann zu einem Vortäuschen von Beschleunigen bzw. Drehraten führen, wobei die Gefahr einer Nichtfunktion oder einer eingeschränkten Funktion oder einer Fehlauslösung die Folge sein kann. Dieser Nachteil kommt umso mehr zum Tragen, je größer die Anforderungen an die Signalauflösung werden und je kleiner die steuergeräteinternen Spannungspegel festgelegt werden. Hinzu kommt der Nachteil, dass Fehler bei einer Analogübertragung nur sehr eingeschränkt identifizierbar sind. Diese Störeinflüsse, die oben genannt wurden, verändern das Sensorausgangssignal auf eine Art, die nur über Signalplausibilitätsbetrachtungen, nicht aber über direkte und messgrößenunabhängige Bewertung der übertragenen Sensorausgangsinformation ermittelbar sind.

Erfindungsgemäß wird nun eine digitale Übertragung zwischen dem Inertialsensor und dem Prozessor im Steuergerät vorgeschlagen. Dazu wird vorzugsweise eine serielle synchrone Schnittstelle verwendet, wobei die digitalen Signale eine höhere Übertragungssicherheit aufweisen. Die übertragene Information ist gegenüber störungsbedingten Spannungspegelveränderungen äußerst robust, da die Spannungsbereiche, die einer logischen Eins oder Null zugeordnet sind, relativ groß sind, typischer Weise größer oder gleich 80% bzw. kleiner gleich 20% des Spannungspegels. Falls aber trotz der höheren Robustheit Übertragungsfehler auftreten könnten, könnten diese mit hoher Wahrscheinlichkeit entdeckt werden. Bezüglich der jeweiligen prozessorseitigen Anforderung nicht definierte Digitalworte können leicht vom System identifiziert werden. Weiterhin ist die Übertragung von Status- und Fehlerbits sowie die Übermittlung von ganzen Datenworten, die eine detaillierte Sensorzustandsbeschreibung beinhalten, ohne relevanten technischen Mehraufwand möglich und vorgesehen. Eine ständige Statuskontrolle ermöglicht die zyklische und/oder permanente Erkennbarkeit von systematischen Übertragungsfehlern.

Daneben ist es ein Vorteil, dass neben der Übertragung von Informationen vom Inertialsensor zum Prozessor auch Befehle in umgekehrter Richtung über die gleiche Schnittstelle übermittelt werden. Damit lassen sich ohne zusätzlichen systemseitigen Hardwaremehraufwand und ohne zusätzlich notwendige Sensorbits Steuerbefehle wie Sensortest oder Ein- und Ausschalten einer sensorintemen Offsetregelung oder Umschaltung von einem Betriebszustand in einen anderen einrichten.

Ein spezieller Vorteil ergibt sich aus der einfach möglichen Kennzeichnung der übertragenen Digitalworte mit Statusbits. Während der Sensorselbsttest aktiviert ist ermöglicht ein entsprechendes Teststatusflag, dass das testbedingte Sensorausgangssignal als solches dem System bekannt ist. Damit ist eine sichere Systemprüfung möglich. Der Einsatz der Erfindung ist auch in anderen automobilen Einsatzgebieten, in denen Inertialsensoren im Systemverbund mit Prozessoren eingesetzt werden möglich und sinnvoll. Beispiele hierfür sind die Fahrdynamikregelung, eine Sensorbox oder Sensorcluster oder die Fahrzeugnavigation.

Die Erfindung bezieht sich insbesondere auf ein Rückhaltesystemsteuergerät und auf darin eingesetzte Inertialsensoren, also Beschleunigungs- und/oder Drehratensensoren, die ein- oder mehrkanalig ausgeführt sein können. Die Sensorsignale werden in einem Sensor-ASIC als digitale Werte bereitgestellt. Das bedeutet, dass der Sensor als ein intelligenter Sensor ausgebildet ist. Ein solcher intelligenter Sensor weist neben dem eigentlichen Sensierungselement auch eine Mess-Signalverstärkung, eine Analog-DigitalWandlung und andere Signalaufbereitungsbausteine auf. Letztlich ist auch ein Schnittstellenbaustein im Sensor-ASIC vorhanden, um die digitale Übertragung zum Prozessor zu gewährleisten.

Insbesondere wird hier die sogenannte Serial Peripherial Interface als Kommunikationsschnittstelle zwischen dem Sensor und dem Prozessor verwendet. Dabei arbeitet der Prozessor als Master und die Inertialsensoren als Slaves. Der SPI-Bus besteht aus vier Leitungen: zunächst der sogenannten SPI-Clock (SCK), also einer Taktleitung. Dann dem Master-Out-Slave-In (MOSI) und dem Master-In-Slave-Out (MISO). Diese beiden Leitungen dienen zur eigentlichen Datenübertragung. Die vierte Leitung ist die sogenannte Chip-Select-Leitung (CS). Sie stellt eine separate Verbindung zwischen jedem einzelnen Inertialsensor und dem Prozessor her. Das heißt, es gibt so viele CS-Leitungen, wie es Slaves gibt. Die anderen drei Leitungen, die SCK, die MOSI und die MISO sind jeweils nur einmal vorhanden und alle Sensoren sind an diese drei Leitungen angeschlossen. Bei einem nicht aktivierten Chip-Select ist MISO hochohmig, also in einem sogenannten Tristate. Die SPI unterstützt kombinierte Schreib-Lese-Zyklen und verwendet einen einheitlichen SPI-Rahmen für Schreiben und Lesen. Aus diesem Grunde sendet der Prozessor die Daten nach dem SPI-Befehl beginnend mit dem MSB (Most Significant Bit). Mit dem Erhalt des SPI-Befehls sendet der Inertialsensor die entsprechenden Daten zum Prozessor, ebenfalls beginnend mit dem MSB.

Hier wird zum einen ein SPI-Rahmen verwendet, der einen 7-Bit-Befehl und 8-Bit-Daten in einem 16-Bit-Rahmen während der aktiven Chip-Select-Phase überträgt. Ein Bit ist für die benötigte Reaktionszeit zwischen Befehl und Datenwort vorgesehen.

Ein zusätzlicher SPI-Rahmen wird verwendet, der die Übertragung eines 12-Bit-Datenworts, das die Beschleunigungs- oder Drehrateninformation beinhaltet, innerhalb des 16-Bit-Rahmens gestattet. Hier wird die Befehlslänge dann auf 3 Bit beschränkt, wobei ein Bit für die Reaktionszeit wiederum vorgesehen ist.

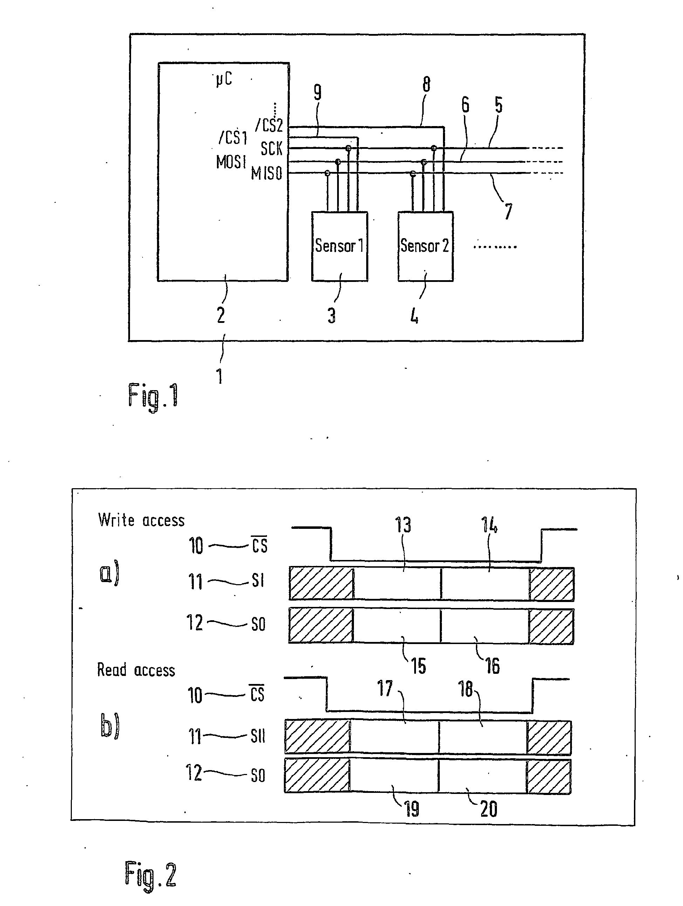

In Figur 1 ist in einem Blockschaltbild des erfindungsgemäße Steuergerät dargestellt. In einem Gehäuse 1 befindet sich ein Prozessor 2 und beispielhaft zwei Inertialsensoren 3 und 4. Die Sensoren 3 und 4 sind jeweils mit dem Prozessor 2 über vier Leitungen verbunden. Dabei sind drei Leitungen für beide Sensoren 3 und 4 gleich, das sind die Leitungen 5 bis 7, wobei die Leitungen 8 und 9 nur jeweils dem einzelnen Sensor zugeordnet sind. Hier ist die Leitung 9 dem Sensor 3 zugeordnet und die Leitung 8 dem Sensor 2. Die Leitungen 8 und 9 wirken als die oben angeführten Chip-Select-Leitungen, sie aktivieren also die Datenübertragung zu dem jeweiligen Sensor. Die Leitung 5 ist die Taktleitung, während die Leitung 6 die Datenübertragung vom Prozessor 2 zu den Sensoren 3 und 4 ermöglicht und die Leitung 7 die Datenübertragung der Sensoren 3 und 4 zum Prozessor 2. Es ist möglich, dass mehr als diese beiden Sensoren 3 und 4 an den Prozessor über diese Leitungen angeschlossen sind, wobei dann diese zusätzlichen Sensoren wiederum eigene Chip-Select-Leitungen aufweisen werden. Weiterhin ist es möglich, dass nur ein einziger Sensor mit dem Prozessor 2 verbunden ist. Andere Komponenten des Steuergeräts sind hier nicht dargestellt. Dazu stellen beispielsweise Schnittstellenbausteine für die Kommunikation außerhalb des Steuergeräts, eine Zündkreisansteuerung und andere Bausteine, wie ein Plausibilitätsschalter. Neben den Sensoren 3 und 4 können auch andere Bausteine an diese SPI-Leitungen angeschlossen sein.

Figur 2a zeigt die Datentelegramme, die bei einer Datenübertragung vom Prozessor zum jeweiligen Sensor stattfinden, also den Rahmen für den Standard-Schreibzugriff. Das Signal 10 ist das Chip-Select-Signal und sorgt mit dem niedrigeren Pegel für eine Kommunikation zwischen dem Prozessor und dem jeweiligen Sensor, d.h. hier können nun Daten über die Leitungen 6 und 7 übertragen werden. In den Feldern 13 und 14 werden der 7-Bit-Schreibbefehl, beispielsweise ein Befehl zum Einschalten der Offsetregelung und 8 Bit Zusatzdaten, beispielsweise zur Zuordnung des Befehls zu einem bestimmten Messkanal oder für die zum Befehl zugehörige Schalterinformation Ein/Aus, an die Sensoren übertragen. In der Zeile 12 wird das Signal vom Sensor zum Prozessor 2 übertragen. In dem Feld 15 werden im Gegenzug 8 Bit Daten mit Status- und Fehlerinformationen an den Prozessor 2 übertragen. Feld 16 wird hier nicht verwendet.

In Figur 2b ist der Rahmen für den Standard-Lesezugriff abgebildet. Es sind wiederum die Zeilen 10, 11 und 12 dargestellt. Wiederum gibt der niedrige Pegel in Zeile 10 an, dass nun die Übertragung zwischen dem Sensor und dem Prozessor stattfindet. In Zeile 11 wird in dem Feld 17 der 7-Bit-Lesebfehl, beispielsweise der Befehl zum Auslesen des Betriebszustands die Offsetregelung betreffend, übertragen. Feld 18 wird hier nicht genutzt. In der Zeile 12 wird das Signal vom Sensor zum Prozessor übertragen. In dem Feld 15 werden wiederum im Gegenzug 8 Bit Daten mit Status- und Fehlerinformationen an den Prozessor 2 übertragen. Feld 16 enthält im vorliegenden Fall keine nutzbare Information. In dem Feld 19 werden im Gegenzug erneut 8 Bit Daten mit Status- und Fehlerinformationen an den Prozessor 2 übertragen. Feld 20 enthält im vorliegenden Fall keine nutzbaren Informationen.

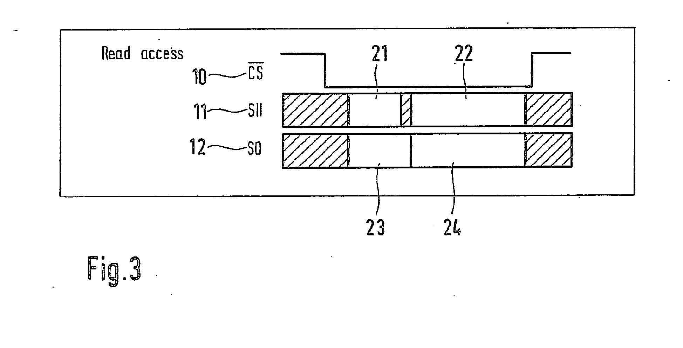

Figur 3 zeigt nun die Datenübertragung vom Sensor zum Prozessor zur Übertragung eines 12-Bit-Datenworts, das die Beschleunigungs- oder Drehrateninformation beinhaltet. D.h. in der Zeile 12 wird im Feld 24 dieses 12-Bit-Datenwort übertragen, während im Feld 21 der Zeile 11 der entsprechende Lese-Befehl an den Sensor übertragen wird. Die Information im Feld 22 dieser Zeile wird im vorliegenden Fall sensorseitig nicht verarbeitet, sie ist also irrelevant. Feld 23 der Zeile 12 enthält an den Prozessor 2 übertragene Status- und Fehlerinformationen.

## Patentansprüche

1. Steuergerät mit einem Prozessor (2) und wenigstens einem Inertialsensor (3, 4) in einem Gehäuse (1), wobei eine Datenübertragung zwischen dem Prozessor (2) und dem wenigstens einen Sensor (3, 4) derart konfiguriert ist, dass die Datenübertragung digital ist, **dadurch gekennzeichnet, dass** die Datenübertragung derart konfiguriert ist, dass übertragene Daten wenigstens ein Fehlerbit und wenigstens ein Statusbit aufweisen, wobei das wenigstens eine Statusbit dem Prozessor (2) ermöglicht, einen Betriebszustand des wenigstens einen Inertialsensors (3, 4) zu erkennen, wobei der Betriebszustand ein laufender Sensortest, ein Offsetregelungsmodus oder eine Initialisierungsphase ist.

2. Steuergerät nach Anspruch 1, **dadurch gekennzeichnet, dass** für die Datenübertragung eine serielle synchrone Schnittstelle vorgesehen ist.

3. Steuergerät nach einem der vorhergehenden Ansprüche, **dadurch gekennzeichnet, dass** die Datenübertragung bidirektional konfiguriert ist.

4. Steuergerät nach einem der vorhergehenden Ansprüche, **dadurch gekennzeichnet, dass** die Datenübertragung zur Auslösung des Sensortests konfiguriert ist.

5. Steuergerät nach einem der vorhergehenden Ansprüche, **dadurch gekennzeichnet, dass** die Datenübertragung zur Auslösung der Offsetregelung des wenigstens einen Inertialsensors (3, 4) konfiguriert ist.

6. Steuergerät nach einem der vorhergehenden Ansprüche, **dadurch gekennzeichnet, dass** für die Datenübertragung vier Leitungen (5 bis 9) vorgesehen sind, von denen eine Leitung jeweils zur Auswahl des wenigstens einen Inertialsensors vorgesehen ist.

7. Steuergerät nach einem der vorhergehenden Ansprüche, **dadurch gekennzeichnet, dass** der wenigstens eine Sensor (3, 4) mehrkanalig ausgebildet ist.

8. Steuergerät nach einem der vorhergehenden Ansprüche, **dadurch gekennzeichnet, dass** die Datenübertragung zur Auslösung einer Umschaltung von einem Betriebszustand in einen anderen des wenigstens einen Inertialsensors (3, 4) konfiguriert ist.

9. Verwendung des Steuergeräts nach einem der Ansprüche 1 bis 8 in einem Rückhaltesystem.

10. Verwendung des Steuergeräts nach einem der Ansprüche 1 bis 8 in einer Fahrdynamikregelung.

## Claims

1. Control unit having a processor (2) and at least one inertial sensor (3, 4) in a housing (1), where data transmission between the processors (2) and the at least one sensor (3, 4) is configured such that the data transmission is digital, **characterized in that** the data transmission is configured such that transmitted data have at least one error bit and at least one status bit, where the at least one status bit allows the processor (2) to identify an operating state of the at least one inertial sensor (3, 4), the operating state being an ongoing sensor test, an offset control mode or an initialization phase.

2. Control unit according to Claim 1, **characterized in that** a serial synchronous interface is provided for the data transmission.

3. Control unit according to one of the preceding claims, **characterized in that** the data transmission is configured bidirectionally.

4. Control unit according to one of the preceding claims, **characterized in that** the data transmission is configured to initiate the sensor test.

5. Control unit according to one of the preceding claims, **characterized in that** the data transmission is configured to initiate the offset control of the at least one inertial sensor (3, 4).

6. Control unit according to one of the preceding claims, **characterized in that** four lines (5 to 9) are provided for the data transmission, one line of which is respectively provided for selecting the at least one inertial sensor.

7. Control unit according to one of the preceding claims, **characterized in that** the at least one sensor (3, 4) is of multichannel design.

8. Control unit according to one of the preceding claims, **characterized in that** the data transmission is configured to initiate changeover from one operating state to another operating state of the at least one inertial sensor (3, 4).

9. Use of the control unit according to one of Claims 1 to 8 in a restraint system.

10. Use of the control unit according to one of Claims 1 to 8 in a driving dynamics control system.

## Revendications

1. Appareil de commande comprenant un processeur (2) et au moins un capteur inertiel (3, 4) logé dans un boîtier (1),
une transmission de données entre le processeur (2) et au moins un capteur (3, 4) étant configurée pour que la transmission de données soit de forme numérique,
**caractérisé en ce que**
la transmission de données est configurée pour que les données transmises présentent au moins un bit de défaut et au moins un bit d'état,
au moins un bit d'état permettant au processeur (2) de reconnaître un état de fonctionnement d'au moins un capteur inertiel (3, 4),
l'état de fonctionnement étant un test courant de capteur, un mode de régulation de décalage ou une phase d'initialisation.

2. Appareil de commande selon la revendication 1,
**caractérisé en ce qu'**
une interface synchrone série est prévue pour la transmission des données.

3. Appareil de commande selon l'une des revendications précédentes,
**caractérisé en ce que**
la transmission des données est à configuration directionnelle.

4. Appareil de commande selon l'une des revendications précédentes,
**caractérisé en ce que** la transmission des données est configurée pour déclencher le test de capteur.

5. Appareil de commande selon l'une des revendications précédentes,
**caractérisée en ce que**
la transmission des données est configurée pour déclencher la régulation de décalage d'au moins un capteur inertiel (3, 4).

6. Appareil de commande selon l'une des revendications précédentes,
**caractérisée en ce que**
la transmission des données est assurée par quatre lignes (5-9) dont une ligne est respectivement prévue pour sélectionner au moins un capteur inertiel.

7. Appareil de commande selon l'une des revendications précédentes,
**caractérisée en ce qu'**
au moins un capteur (3, 4) est à canaux multiples.

8. Appareil de commande selon l'une des revendications précédentes,
**caractérisée en ce que**
la transmission des données est configurée pour déclencher une commutation d'un état de fonctionnement à l'autre pour au moins un capteur inertiel (3, 4).

9. Utilisation de l'appareil de commande selon l'une des revendications 1 à 8 dans un système de retenue.

10. Utilisation de l'appareil de commande selon l'une des revendications 1 à 8 dans un système de régulation de la dynamique de roulage.
